# EUROPEAN PATENT APPLICATION

(11) **EP 4 850 794 A1**
(43) Date of publication of application: **09.12.2026**
(21) Application number: 24904489.2
(22) Date of filing: 04.12.2024
(51) Int. Cl.: B01D 59/00, B01D 59/28

(54) **METHOD FOR SEPARATING NITROGEN ISOTOPES**

(30) Priority: 12.12.2023 RU 2023132879
(71) Applicant: Bochvar High-Technology Research Institute For Inorganic Materials, Joint-Stock Company, Moscow, 123098 (RU)
(72) Inventor: SEMENOV, Alexander Alexandrovich, Moscow, 123098 (RU); LIZUNOV, Alexey Vladimirovich, Moscow, 123098 (RU); BELYAKOV, Mikhail Ivanovich, Moscow, 123098 (RU); ANIKIN, Alexander Sergeevich, Moscow, 123098 (RU); TARASOV, Vasily Romanovich, Moscow, 123098 (RU)
(74) Representative: Spengler, Robert
(86) International application number: PCT/RU2024/000361
(87) International publication number: WO 2025/127962

(57) **Abstract**

The invention relates to the technology of the production of concentrated nitrogen isotopes by physical and chemical methods, and can be used in nuclear power industry, as well as in biology, medicine, and agriculture. The nitrogen isotope separation method is carried out by chemical isotope exchange with ammonia as the working fluid. The nitrogen isotopes are separated in a two-phase gas-liquid system, with the liquid phase containing one or more polyatomic alcohols and/or amino alcohols that form complex compounds with ammonia. This increases the efficiency of the process.

## Description

The invention relates to chemical technology, namely to the production of concentrated nitrogen isotopes by physical and chemical methods, and can be used in nuclear power industry, as well as in biology, medicine, and agriculture.

Currently, the nuclear power industry has adopted the concept of a closed nuclear fuel cycle (CNFC) which involves the use of mixed uranium-plutonium nitride fuel for fast neutron reactors. Implementation of the CNFC will significantly reduce the generation of radioactive waste and utilize depleted uranium, which has accumulated in large quantities at nuclear industry facilities, as a fuel component. However, the natural nitrogen isotope composition of such fuel consists of more than 99.6 mol% of the isotope nitrogen-14 (¹⁴N) which significantly absorbs neutrons, forming radioactive isotopes of tritium and carbon-14. At the same time, nitrogen-15 (¹⁵N), which is present in the natural isotopic mixture at 0.366 mol%, practically does not absorb neutrons, therefore fuel based on it will be characterized by lower unproductive neutron consumption and significantly lower production of biologically hazardous tritium and carbon-14. Separating nitrogen-15 from the natural isotopic mixture in concentrated form is a very complex task, especially if the goal is to produce nitrogen-15 with a concentration of up to 90 mol% or more in quantities of approximately a ton per year. The proposed isotope separation method, in which nitrogen-15 isotope enrichment is achieved through a chemical isotope exchange reaction in systems with polyatomic alcohols (polyols) and/or amino alcohols, using ammonia as the working fluid, will enable these tasks to be accomplished with maximum efficiency, minimal reagent and energy consumption, and minimal waste generation.

Physical methods of isotope separation, such as gas centrifugal and laser methods, are unsuitable for large-scale nitrogen-15 production due to their low productivity and very high costs per separative work unit. More effective physical and chemical methods used for nitrogen isotope separation can be roughly divided into four groups based on the type of working fluids used in the separating mass exchange columns.

The nitric acid, or Nitrox, method of nitrogen isotope separation is well-known and has become the most widely used. This method is based on chemical isotope exchange between nitric acid in the liquid phase and a gaseous mixture of nitrogen monoxide and nitrogen dioxide, according to reactions (1-2)

¹⁵NO_{(g)} + H¹⁴NO₃₍ₗ₎ ↔ ¹⁴NO_{(g)} + H¹⁵NO₃₍ₗ₎ (1)

¹⁵NO_{2(g)} + H¹⁴NO₃₍ₗ₎ ↔ ¹⁴NO_{2(g)} + H¹⁵NO₃₍ₗ₎ (2)

The high single-pass nitrogen isotope separation factors in this system (up to 1.055) and good process kinetics allow for efficient isotope separation in columns of relatively small height and diameter. The main problem with the Nitrox method is the need for large quantities of sulfur dioxide to completely convert the nitric acid leaving the isotope exchange column into nitrogen oxides which are returned to the column via reaction (3)

HNO₃ + SO₂ → NOₓ + H₂SO₄ (3)

Sulfur dioxide consumption can reach up to 50 tons per 1 kg of highly enriched nitrogen-15 produced. An equivalent amount of sulfuric acid is generated as waste, requiring disposal. Therefore, the classic Nitrox method is virtually impossible to use for large-scale nitrogen-15 production.

To return sulfur dioxide to the nitrogen recovery cycle, it was proposed to thermally decompose sulfuric acid into its components (RO131314. Axente D.A., Balia A.C., Marcu M.C., Gergely §. Method and plant for producing the isotope by isotopic exchange in NOx-HNO3 system. Publ. 30.08.2016. IPC B01D).

The disadvantages of this method include the need for repeated heating and cooling of corrosive media to purify sulfur dioxide from other decomposition products, which is energy-intensive and, furthermore, incomplete. Another known method for implementing the Nitrox method involves eliminating chemical flow reversal by conducting a two-temperature exchange between nitric acid with a concentration above 40% and nitrogen oxides in the temperature range from -(50-47) to +(47-50) °C (author's certificate SU 786102 A1 RF, Vetsko V.M., Gorshkov V.I., Egiazarov A.S. et al., priority 03.04.1979, published 27.01.1995). This option would require a significant increase in the size and metal intensity of the isotope separation equipment and is therefore unsuitable for producing large quantities of nitrogen-15.

Low-temperature rectification of nitrogen monoxide (up to 1.03) is characterized by high values of the single-pass nitrogen isotope separation factor. One of the implementation options for this method for producing nitrogen-15 includes automatic hydrodynamic control of the column for obtaining the target component (patent RU 2299090 C2, Borman V.D., Vetsko V.M., Golyshev V.G. et al., priority 12.01.2005, published 20.06.2006). The production of nitrogen-15 using this technology is associated with high costs of cryogenic agent, with the explosion hazard of the process, and the risk of catastrophic freezing of nitrogen monoxide in the column, given that it has very close melting (-163.6 °C) and boiling (-151.7 °C) temperatures. The organization of tonnage production of nitrogen-15 for nitride fuel of fast reactors by this method is also complicated by the need to use large quantities of toxic, corrosive nitrogen monoxide and the disposal of its waste, depleted in nitrogen-15.

Processes using molecular nitrogen N₂ as the working fluid are very attractive for producing large quantities of the nitrogen-15 isotope. It is the safest form of nitrogen: non-toxic, chemically inert, and also the cheapest and most readily available. Low-temperature rectification at temperatures ranging from -210 °C (triple point) to -147 °C (critical point) can be used to separate nitrogen isotopes. The process of obtaining nitrogen-15 can be implemented by low-temperature distillation of nitrogen containing trace amounts of oxygen and argon, in a cascade of columns in which the argon-oxygen mixture is discharged from the bottom of the final column, and liquid nitrogen enriched in nitrogen-15 is withdrawn from an intermediate point of the final column (patent EP 2191885 (A1), filed 12.09.2008, published 02.06.2010). Unfortunately, this process is characterized by very low isotope separation factors (about 1.004), which makes it very energy-intensive and inefficient. It is possible to increase the nitrogen isotope separation factors and avoid low temperatures by using chemical isotope exchange between gaseous molecular nitrogen and solutions in which it is present in the form of complexes with certain transition metals (patent RU 2583808 C1, Semenov A.A., Skupov M.V., Lizunov A.V. et al., priority 18.02.2015, published 10.05.2016). However, this method, like all those using molecular nitrogen N₂ as the working fluid, cannot be used directly to obtain nitrogen-15 with a concentration above 50%, since in the natural isotopic mixture, almost all nitrogen-15 is present in the form of very stable molecules of mixed isotopic composition ¹⁵N¹⁴N. To obtain ¹⁵N₂ molecules from them, additional complex and energy-intensive homomolecular isotope exchange operations are required, which significantly reduces the efficiency of such nitrogen isotope separation methods.

The closest approaches to the claimed option are nitrogen isotope separation methods using ammonia as the working fluid. Ammonia is the most abundant nitrogen compound, inexpensive, easy to handle, and environmentally friendly. Since the ammonia molecule contains only one nitrogen atom, when used as a working fluid for isotope separation, unlike the previous case, ammonia requires no homomolecular isotope exchange reaction. Ammonia can undergo a reversible complexation reaction with certain organic compounds. If such a reaction is accompanied by an isotope effect, it can potentially be used for nitrogen isotope separation. Phase flow reversal can be achieved thermally by sorbing ammonia with a cooled complexing agent at the bottom of the column and releasing the ammonia from the complex by heating at the top.

The system "ammonia - ammonia complex with pentanol" was chosen as a prototype (Naing Zo E., Cherednichenko S.A., Khoroshilov A.V. Isotope equilibrium in the system ammonia - a complex compound of ammonia with pentanol-1. Advances in chemistry and chemical technology: Collection of scientific papers. - Vol. XXVI, No. 7 (136). - Moscow: D.I. Mendeleev University of Chemical Technology of Russia). Pentanol-1 has a fairly high boiling point (136-138 °C), therefore it allows for more complete decomposition of the complex with ammonia than in the case of light alcohols. The value of a single separation factor of nitrogen isotopes in this system at a temperature of 293 K was 1.0095. The residual concentration of ammonia in pentanol-1 after desorption was 0.3 µg/cm³. The proposed method allows obtaining nitrogen-15 with a molar concentration of 30-50% with a product loss rate of 5-10%, respectively.

Obtaining a more concentrated nitrogen-15 will lead to a higher product loss and a significant reduction in separation efficiency, which is the main drawback of this nitrogen isotope separation method. Another drawback of this system is the low volumetric concentration of ammonia in pentanol-1 at saturation (0.286 mol ammonia per mol of alcohol, or 2.63 mol/l at 20 °C). Obtaining a product with a 90% nitrogen-15 concentration from nitrogen of natural isotopic composition in a column would require at least 870 theoretical stages.

Thus, all previously known systems for nitrogen isotope separation using ammonia and thermal flow reversal were characterized either by low isotope effects and low complexing agent loading, or by incomplete flow reversal during thermal decomposition of the complex.

The objective was to find liquid reagents that would combine high ammonia loading during complexation with a high nitrogen isotope effect and the ability to completely desorb ammonia. Compounds containing two or more hydroxyl groups (polyalcohols), as well as amino alcohols due to their high ammonia capacity and high boiling point, have proven to be the most effective reagents.

The technical result is a method for producing highly concentrated nitrogen-15 by separating nitrogen isotopes in a new system with chemical isotope exchange between gaseous ammonia and a liquid phase containing a complex of ammonia with one or more polyatomic alcohols and/or amino alcohols, which significantly increases the process efficiency.

The technical result is achieved in a method for separating nitrogen isotopes by chemical isotope exchange with ammonia as a working fluid, wherein the nitrogen isotopes are separated in a two-phase gas-liquid system with a liquid phase containing one or more polyatomic alcohols and/or amino alcohols that form complex compounds with ammonia.

Polyatomic alcohols from the series: ethylene glycol, 1,2-propylene glycol, 1,3-propylene glycol, glycerin, and amino alcohols from the series: monoethanolamine, diethanolamine, triethanolamine, or mixtures containing the above substances are used.

The chemical isotope exchange between gaseous ammonia and the liquid phase containing dissolved ammonia is carried out in a separating counter-current mass exchange unit of a column type filled with a packing.

The liquid phase is heated in a lower part of the separating counter-current mass exchange unit of the column type until ammonia is completely removed from it, after which the liquid phase purified from ammonia is fed to an upper part of the unit for reflux, and released gaseous ammonia is returned to the lower part of the unit in counter-current with respect to the liquid phase.
Fig. shows a schematic diagram of the nitrogen isotope separation process in the separating counter-current mass exchange unit of the column type using ammonia as the working fluid.

The unit operates as follows. Stream of gaseous ammonia 3 in separating column 2 is fed countercurrently to liquid phase 4 which contains ammonia dissolved in it as a complex compound. Separating column 2 is filled with a packing which mediates multistage mass exchange between the liquid and gaseous phases, thereby concentrating nitrogen-15 in the liquid phase. The maximum concentration of the heavy nitrogen isotope is achieved at the bottom of the column. From the bottom of separating column 2, ammonia-saturated liquid phase 4 is fed to heated stripper 6 where the thermal decomposition of the liquid ammonia complex compounds occurs and ammonia is released as gaseous phase. Liquid phase 5, purified from ammonia in thermal stripper 6, is fed to the upper section of the unit, into cooled absorber 1 where ammonia exiting the top of separating column 2 is absorbed by the liquid phase, forming complex compounds. The product, in the form of ammonia enriched in nitrogen-15, is collected in the lower section of the separating column, at the outlet of gaseous ammonia from thermal stripper 6. The feed stream of ammonia of natural isotopic composition for the separating unit is fed to the middle section of separating column 2, and the waste (nitrogen-14) is discharged at its upper section. Thermal decomposition of ammonia complex compounds in stripper 6 consumes thermal energy +Q; heat removal -Q must be carried out in absorber 1.

The properties of the proposed reagents (complexing agents) and n-pentanol are compared in the table.

**Table. Properties of reagents that form complex compounds with ammonia**

| Complexing agent | Melting temperature, °C | Boiling temperature, °C | Density at 20 °C, g/cm³ | / Molar weight, g/mol | Content of OH-groups, mol/l |
|---|---|---|---|---|---|
| Ethylene glycol | -12.9 | 197.3 | 1.113 | 62.07 | 35.9 |
| 1,2-propylene glycol | -60 | 187.4 | 1.036 | 76.09 | 27.2 |
| 1,3-propylene glycol | -27 | 214 | 1.06 | 76.09 | 27.9 |
| Glycerin | 17.9 | 290 | 1.26 | 92.1 | 41 |
| Monoethanolamine | 10.3 | 170 | 1.01 | 61.1 | 16.5 |
| Diethanolamine | 27 | 280 | 1.10 | 105.1 | 20.9 |
| Triethanolamine | 22 | 335 | 1.124 | 149.2 | 22.6 |
| n-Pentanol (prototype) | -79 | 138 | 0.800 | 88.15 | 9.08 |

All of the newly proposed complexing agents, in addition to high boiling points, also have high densities and a higher specific content of hydroxyl groups per molecule than pentanol and other alcohols containing a single hydroxyl group, which significantly increases their capacity for ammonia sorption.

According to the claimed invention, nitrogen isotope separation occurs in a two-phase gas-liquid system with one or more polyatomic alcohols and/or amino alcohols, with ammonia serving as the working fluid. In this system, the polyatomic alcohols and/or amino alcohols act as complexing agents in a chemical isotope exchange system, reversibly binding ammonia via reaction (4), resulting in an isotope effect

¹⁵NH_{3(gas)} + ¹⁴NH₃·R(OH)ₙ₍ₗ₎ ↔ ¹⁴NH_{3(gas)} + ¹⁵NH₃·R(OH)ₙ₍ₗ₎ (4)

In reaction (4), alcohols and amino alcohols such as ethylene glycol, 1,2-propylene glycol, 1,3-propylene glycol, glycerin, monoethanolamine, diethanolamine, triethanolamine, or mixtures containing these substances act as ammonia complexing agents. To maximize the single-stage separation effect, chemical isotope exchange between gaseous ammonia and the liquid ammonia-alcohol complex is performed in a separating counter-current mass exchange unit of a column type filled with a packing. Thermal reversal of the phase flows is utilized in the column-type separating unit. To achieve this, the liquid phase exiting the bottom of the column is heated until all ammonia is removed. The purified complexing agent (alcohol and/or amino alcohol) is then fed to the top of the separating unit for reflux, while the released gaseous ammonia is fed to the bottom of the column counter-current to the liquid phase. The chemical isotope exchange reaction in the system is carried out in the temperature range of -32 to 50 °C (241-323 K) at an ammonia pressure of 133 to 1·10⁵ Pa. The ammonia complex is decomposed thermally by heating it to a temperature of 50-300 °C at a pressure of 133 to 1·10⁵ Pa.

The invention is illustrated by the following specific examples.
Example 1. Ethylene glycol is brought into multistage counter-current contact with ammonia in a packed column at atmospheric pressure and 20 °C (single isotope separation factor α=1.012, ammonia capacity 12.6 mol/l). The complex is decomposed at atmospheric pressure at 197.3 °C. The residual ammonia concentration in the liquid after desorption is 0.15 µg/cm³. A product with a concentration of 90% nitrogen-15 is obtained in a column with 670 theoretical stages.
Example 2. Ethylene glycol is brought into contact with ammonia at atmospheric pressure and 0 °C (α=1.015, ammonia capacity 23.4 mol/l). The complex is decomposed at atmospheric pressure at 197.3 °C. The residual ammonia concentration in the liquid after desorption is 0.15 µg/cm³. A product with a concentration of 90% nitrogen-15 is obtained in a column with 530 theoretical stages.
Example 3. Ethylene glycol is brought into contact with ammonia at atmospheric pressure and - 32 °C (α=1.02, ammonia capacity 33.6 mol/l). The complex is decomposed at atmospheric pressure at 197.3 °C. The residual ammonia concentration in the liquid after desorption is 0.15 µg/cm³. A product with a concentration of 90% nitrogen-15 is obtained in a column with 405 theoretical stages.
Example 4. 1,2-Propylene glycol is brought into contact with ammonia at atmospheric pressure and 20 °C (α=1.011, ammonia capacity 7.5 mol/l). The complex is decomposed at atmospheric pressure at 184.7 °C. The residual ammonia concentration in the liquid after desorption is 0.1 µg/cm³. A product with a concentration of 90% nitrogen-15 is obtained in a column with 720 theoretical stages.
Example 5. 1,2-Propylene glycol is brought into contact with ammonia at atmospheric pressure and 0 °C (α=1.014, ammonia capacity 17.02 mol/l). The complex is decomposed at atmospheric pressure at 184.7 °C. The residual ammonia concentration in the liquid after desorption is 0.1 µg/cm³. A product with a concentration of 90% nitrogen-15 is obtained in a column with 575 theoretical stages.
Example 6. 1,3-Propylene glycol is brought into contact with ammonia at 20 °C(α=1,011, ammonia capacity 10 mol/l). The complex is decomposed at atmospheric pressure at 214 °C. The residual ammonia concentration in the liquid after desorption is 0.1 µg/cm³. A product with a concentration of 90% nitrogen-15 is obtained in a column with 715 theoretical stages.
Example 7. Glycerin is brought into contact with ammonia at atmospheric pressure and 20 °C (α=1.013, ammonia capacity 33.07 mol/l). The complex is decomposed at atmospheric pressure at 250 °C. The residual ammonia concentration in the liquid after desorption is 0.1 µg/cm³. A product with a concentration of 90% nitrogen-15 is obtained in a column with 605 theoretical stages.
Example 8. Monoethanolamine is brought into contact with ammonia at atmospheric pressure and 20 °C (α=1.010, ammonia capacity 3.6 mol/l). The complex is decomposed at atmospheric pressure at 160 °C. The residual ammonia concentration in the liquid after desorption is 0.28 µg/cm³. A product with a concentration of 90% nitrogen-15 is obtained in a column with 783 theoretical stages.
Example 9. Diethanolamine is brought into contact with ammonia at atmospheric pressure and 20 °C (α=1.011, ammonia capacity 4.7 mol/l). The complex is decomposed at atmospheric pressure at 270 °C. The residual ammonia concentration in the liquid after desorption is 0.1 µg/cm³. A product with a concentration of 90% nitrogen-15 is obtained in a column with 725 theoretical stages.
Example 10. Triethanolamine is brought into contact with ammonia at atmospheric pressure and 20 °C (α=1.012, ammonia capacity 5.8 mol/l). The complex is decomposed at atmospheric pressure at 325 °C. The residual ammonia concentration in the liquid after desorption is 0.1 µg/cm³. A product with a concentration of 90% nitrogen-15 is obtained in a column with 654 theoretical stages.
Example 11. A mixture of 10 wt.% of glycerin with ethylene glycol is brought into contact with ammonia at atmospheric pressure and 20 °C (α=1.013, ammonia capacity 5.8 mol/l). The complex is decomposed at atmospheric pressure at 200 °C. The residual ammonia concentration in the liquid after desorption is 0.1 µg/cm³. A product with a concentration of 90% nitrogen-15 from nitrogen of natural isotopic composition is obtained in a column with 605 theoretical stages.
Example 12. Pentanol-1 containing 0.001 wt.% monoethanolamine is brought into multistage counter-current contact with ammonia in a packed column at atmospheric pressure and 20 °C (single isotope separation factor α=1.00952, ammonia capacity 2.67 mol/l). The complex is decomposed at atmospheric pressure at 140 °C. The residual ammonia concentration in the liquid after thermal desorption is 0.29 µg/cm³. A product with a concentration of 90% nitrogen-15 is obtained in a column with 850 theoretical stages.
Example 13. Pentanol-1 containing 30 wt.% ethylene glycol is brought into multistage counter-current contact with ammonia in a packed column at atmospheric pressure and 20 °C (single isotope separation factor α=1.010, ammonia capacity 5.6 mol/l). The complex is decomposed at atmospheric pressure at 160 °C. The residual ammonia concentration in the liquid after thermal desorption is 0.26 µg/cm³. A product with a concentration of 90% nitrogen-15 is obtained in a column with 780 theoretical stages.
Example 14. Pentanol-1 containing 1.0 wt.% 1,2-propylene glycol is brought into multistage counter-current contact with ammonia in a packed column at atmospheric pressure and 20 °C (single isotope separation factor α=1.00955, ammonia capacity 2.68 mol/l). The complex is decomposed at atmospheric pressure at 145 °C. The residual ammonia concentration in the liquid after thermal desorption is 0.28 µg/cm³. A product with a concentration of 90% nitrogen-15 is obtained in a column with 830 theoretical stages.
Example 15. Pentanol-1 containing 5.0 wt.% 1,3-propylene glycol is brought into multistage counter-current contact with ammonia in a packed column at atmospheric pressure and 20 °C (single isotope separation factor α=1.0096, ammonia capacity 2.9 mol/l). The complex is decomposed at atmospheric pressure at 150 °C. The residual ammonia concentration in the liquid after thermal desorption is 0.27 µg/cm³. A product with a concentration of 90% nitrogen-15 is obtained in a column with 810 theoretical stages.
Example 16. Ethylene glycol containing 0.1 wt.% glycerin is brought into contact with ammonia at atmospheric pressure and 0 °C (α=1.015, ammonia capacity 24.0 mol/l). The complex is decomposed at atmospheric pressure at 200 °C. The residual ammonia concentration in the liquid after thermal desorption is 0.14 µg/cm³. A product with a concentration of 90% nitrogen-15 is obtained in a column with 525 theoretical stages.
Example 17. Ethylene glycol containing 0.1 wt.% diethanolamine is brought into contact with ammonia at atmospheric pressure and -32 °C (α=1.02, ammonia capacity 33.7 mol/l). The complex is decomposed at atmospheric pressure at 200 °C. The residual ammonia concentration in the liquid after thermal desorption is 0.15 µg/cm³. A product with a concentration of 90% nitrogen-15 is obtained in a column with 400 theoretical stages.
Example 18. 1,2-Propylene glycol containing 0.1 wt.% triethanolamine is brought into contact with ammonia at atmospheric pressure and 20 °C (α=1.011, ammonia capacity 7.5 mol/l). The complex is decomposed at atmospheric pressure at 190 °C. The residual ammonia concentration in the liquid after thermal desorption is 0.11 µg/cm³. A product with a concentration of 90% nitrogen-15 is obtained in a column with 710 theoretical stages.
Example 19. 1,2-Propylene glycol containing 0.01 wt.% 1,3-propylene glycol is brought into contact with ammonia at atmospheric pressure and 0 °C (α=1.014, ammonia capacity 17.0 mol/l). The complex is decomposed at atmospheric pressure at 185 °C. The residual ammonia concentration in the liquid after thermal desorption is 0.1 µg/cm³. A product with a concentration of 90% nitrogen-15 is obtained in a column with 570 theoretical stages.
Example 20. 1,3-Propylene glycol containing 0.001 wt.% glycerin is brought into contact with ammonia at 20 °C (α=1.011, ammonia capacity 10 mol/l). The complex is decomposed at atmospheric pressure at 215 °C. The residual ammonia concentration in the liquid after thermal desorption is 0.1 µg/cm³. A product with a concentration of 90% nitrogen-15 is obtained in a column with 710 theoretical stages.
Example 21. Glycerin containing 0.001 wt.% triethanolamine is brought into contact with ammonia at atmospheric pressure and 20 °C (α=1.013, ammonia capacity 33.2 mol/l). The complex is decomposed at atmospheric pressure at 260 °C. The residual ammonia concentration in the liquid after thermal desorption is 0.1 µg/cm³. A product with a concentration of 90% nitrogen-15 is obtained in a column with 610 theoretical stages.
Example 22. Pentanol-1 containing 30 wt.% ethylene glycol and 0.1 wt.% glycerin is brought into contact with ammonia at atmospheric pressure and 20 °C (α=1.0105, ammonia capacity 2.7 mol/l). The complex is decomposed at atmospheric pressure at 165 °C. The residual ammonia concentration in the liquid after thermal desorption is 0.25 µg/cm³. A product with a concentration of 90% nitrogen-15 from nitrogen of natural isotopic composition is obtained in a column with 750 theoretical stages.

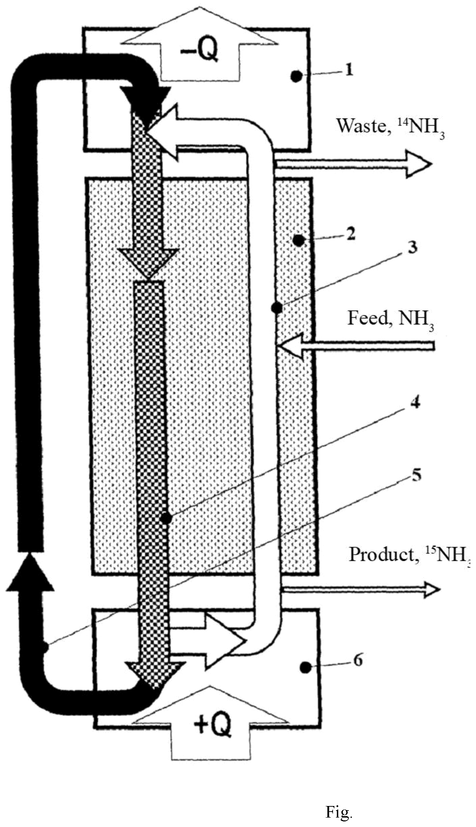

## Claims

1. A method for separating nitrogen isotopes by chemical isotope exchange with ammonia as a working fluid, **characterized in that** the nitrogen isotopes are separated in a two-phase gas-liquid system with a liquid phase containing one or more polyatomic alcohols and/or amino alcohols that form complex compounds with ammonia.

2. The method according to claim 1, **characterized in that** polyatomic alcohols from the series: ethylene glycol, 1,2-propylene glycol, 1,3-propylene glycol, glycerin, and amino alcohols from the series: monoethanolamine, diethanolamine, triethanolamine, or mixtures containing the above substances are used.

3. The method according to claim 1, **characterized in that** the chemical isotope exchange between gaseous ammonia and the liquid phase containing dissolved ammonia is carried out in a separating counter-current mass exchange unit of a column type filled with a packing.

4. The method according to claim 3, **characterized in that** the liquid phase is heated in a lower part of the separating counter-current mass exchange unit of the column type until ammonia is completely removed from it, after which the liquid phase purified from ammonia is fed to an upper part of the unit for reflux, and released gaseous ammonia is returned to the lower part of the unit in counter-current with respect to the liquid phase.
